# EUROPEAN PATENT SPECIFICATION

(11) **EP 4 085 989 B1**
(45) Date of publication and mention of the grant of the patent: **11.09.2024**
(21) Application number: 22172039.4
(22) Date of filing: 06.05.2022
(51) Int. Cl.: B01D 33/327, B01D 33/333, B01D 33/056, B01D 33/46

(54) **FILTERING APPARATUS**
FILTERVORRICHTUNG
APPAREIL DE FILTRAGE

(30) Priority: 06.05.2021 GB 202106468
(43) Date of publication of application: 09.11.2022
(73) Proprietor: The Haigh Engineering Company Ltd, Ross-on-Wye , Hertfordshire HR9 5NG (GB)
(72) Inventor: DEAVILLE, Gary, Ross on Wye, HR9 5NG (GB); FREEMAN, David, Ross on Wye, HR9 5NG (GB)
(74) Representative: Graham Watt & Co LLP

(56) References cited:
- EP-A1- 0 913 182
- US-A- 5 565 093
- US-A- 5 800 701
- US-A1- 2007 163 928
- US-A1- 2007 241 039
- US-B2- 8 092 674

## Description

The present invention relates to a filtering apparatus that removes solid material from a liquid. The apparatus is particularly suited to removing solid debris from wastewater and storm water but can be applied to the separation of solid material from liquids in other applications, such as in abattoirs or distilleries. The apparatus is particularly adapted for use in applications where the liquid to be filtered is flowing in a channel.

Filtering apparatus comprising a plurality of filter screens is commonly used to remove large pieces of solid material from wastewater. Such filtering is often one of the first processes in the treatment of sewage where solid material such as plastic, paper, rags or wipes needs to be removed to prevent clogging or damage at subsequent treatment stages. Most large facilities now use automated screens which lift the waste material out of the liquid and are mechanically cleaned.

One example of such a filtering apparatus is a band screen described in GB 2,452,273. The apparatus comprises a plurality of screens with a mesh-like surface structure which are driven around a loop by endless drive chains to continuously lift solids caught in the screens to the top of the apparatus where they are discharged into a trough. The screens have small shelves for lifting the solids and the apparatus is designed to be positioned vertically in the flow. This can result in rag-rolling, where larger pieces of solid material collect near the base of the screen and are not removed from the liquid.

GB 2,350,070 describes screening apparatus comprising a screening belt formed from a plurality of perforated elements interspersed with unperforated buckets to partially address this problem. Each bucket may include a cam which engages with a stationary cam and causes the bucket to rotate and empty at a desired level.

However, such an arrangements significantly restricts the liquid flow and the buckets are difficult to fully empty and to clean. These and other problems are addressed by the present invention.

Various other examples of screening apparatus can be found in US 8,092,674, US 2007/0163923, US 5,800,701, US 2007/0241039 and EP0913182. Each describes filter screens being driven around in a continuous loop.

An object of the present invention is to provide an improved apparatus that will remove solid material from a liquid. The apparatus provides more efficient fine screen filtering, particularly when a large amount of solid material is present, which would clog existing apparatus or result in rag rolling. In addition, features relating to the cleaning of the filter screens and the seals between adjacent screens are improved.

The present invention comprises apparatus for removing solid material from liquid, the apparatus comprising a pair of chains, each forming a continuous loop; a plurality of step-shaped filter units each comprising a riser plate and a tread plate, each filter unit mounted by rotatable mounts allowing rotation about an axis along the edge of the riser plate opposite to the tread plate; a drive mechanism to convey the filter units around the loop; and a guide track that engages with the filter units to guide the rotation of each filter unit such that in use, each unit sequentially transitions between presenting a stepped profile and a smooth profile on the outside of the loop.

The guide track may comprise rails which engage with castors mounted on each filter unit nearer to the edge of the tread plate opposite to the riser plate than to the rotatable mount so that, in use, rotation of the filter unit about the rotatable mount at the trailing edge is controlled by the castors at the leading edge.

In one embodiment, the stepped profile is presented on those parts of the loop where the filter unit is rising, to support solid material on the step.

The stepped profile is preferably maintained over the top of the loop to allow solid material to fall from the inverted step into a discharge chute by gravity.

A cleaning brush may be positioned to brush solid material off the units into a discharge chute and, preferably, the units present a smooth profile as they pass the cleaning brush. The brush may be a rotatable cylindrical brush optionally incorporating wipers. In one embodiment, a motor that drives the drive mechanism also drives the brush.

In one embodiment, a seal is mounted to the trailing edge of each unit to form a tight seal with the leading edge of the adjacent unit. The seal is preferably spring loaded to bias it towards the adjacent unit.

The part of the unit that forms a tread plate of the step may be substantially shaped as an arc of a circle centred on the unit mount. That is, a cross section of the tread plate of each filter unit is in part shaped as an arc of a circle centred on the axis of the rotatable mount of the filter unit. This results in a gap between adjacent filter units remaining the same when the filter unit rotates about the mount.

The trailing edge of the tread plate (i.e. the edge where the tread plate meets the riser plate) may incorporate a smooth ridge. This improves contact with the seal by reducing the gap between adjacent filter units when they are rotated to present a smooth profile on the outside of the loop.

The filter units may include tines extending from the tread plate or the riser plate.

Preferably, the trailing edge of a filter unit (i.e. the edge of the riser plate opposite the tread plate) pushes the solid material from the tread plate of a following unit as the units transition from presenting a stepped profile to presenting a smooth profile.

The apparatus may comprise cleaning jets which spray liquid that has already been filtered by the apparatus though the units in the opposite direction to the flow of the liquid being filtered to push the solid material off the units into the discharge chute.

Preferably, the bottom of the loop is in a channel which carries the liquid and, optionally, the apparatus includes a brush seal positioned between the bottom of the channel and the bottom of the loop of units to prevent solids passing under the units and wherein the units presents a smooth profile as they pass the brush seal.

In one embodiment, the apparatus comprises a top module, a bottom module and one or more central modules such that the loop may be any desired length.

In one embodiment, the bottom section of the loop is in a channel which carries the liquid but may be pivoted about a point above a coping level of the channel to lift the apparatus out of the channel to facilitate maintenance or cleaning.

The apparatus may be constructed substantially of stainless steel.

Preferably, the step-shaped filter units further comprise a removable filter screen retained by a spring loaded plate.

Exemplary embodiments and features of the present invention will now be described with reference to the accompanying drawings, in which:
Figure 1 shows a perspective view of an embodiment of a filtering apparatus according to the present invention;
Figure 2 shows a side view from the right of the filtering apparatus in a maintenance position;
Figure 3 shows a side view from the left of the filtering apparatus with the side cover cut away to show the loop of filter units;
Figure 4 shows a perspective view of two filter units;
Figure 5 shows a close up side view from the left of a short section of the loop of filter units;
Figure 6 shows a side view from the right of a bottom section of the apparatus, showing part of the guide track system;
Figure 7 shows a side view from the right of a top section of the apparatus;
Figure 8 shows a side view from the right just below the top section of the apparatus, showing the position of the cleaning brush; and
Figure 9 shows a side view from the right of a close up of a spring loaded seal between two screens.

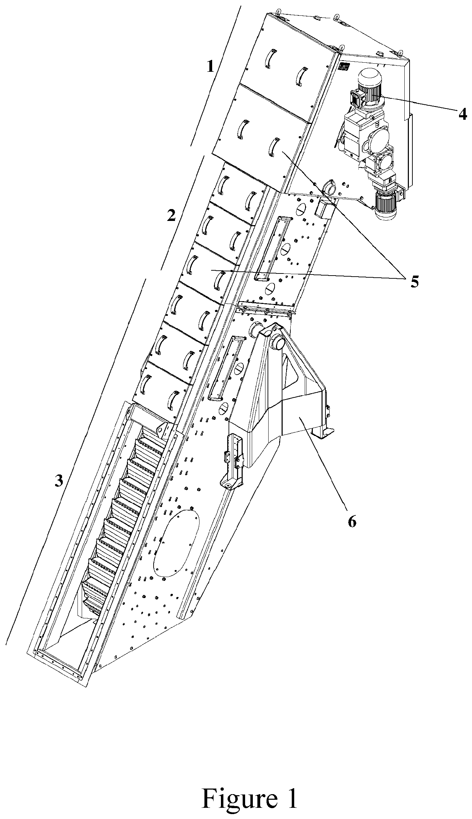

Referring to the drawings, Figure 1 shows the main external features of an exemplary embodiment of the filtering apparatus. The apparatus shown is formed from three types of module, a top module 1, preferably including a drive mechanism 4 and cleaning apparatus, one or more central modules 2 where the filter units are preferably covered with cover plates 5 and a bottom module 3 adapted to be placed in the liquid flow to collect the solid materials. Depending on the length of screen required for a specific application, any number of central modules 2 and a corresponding number of additional filter units, may be added allowing for efficient construction of filtering apparatus specified at different lengths.

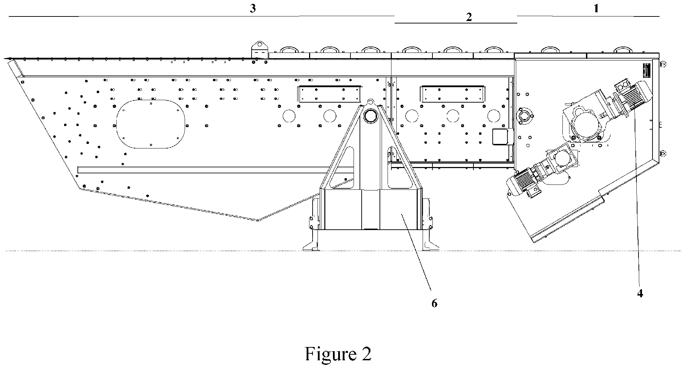

The apparatus is shown attached to a main support 6. The support 6 is designed to sit on a coping of a channel. A pivot between the apparatus and the main support 6 allows the apparatus to pivot on the support such that the bottom module can be lifted out of the fluid to facilitate cleaning and maintenance. This configuration is shown in Figure 2. The weight of the apparatus on either side of the pivot is approximately balanced at the pivot so that it is easy to lift the apparatus out of the channel. However, the pivot is positioned slightly above the centre of mass of the apparatus such that the bottom section weights more, urging the bottom module to naturally rest in the channel under its own weight. If the installation environment requires it, the apparatus can be angled at up to 80 degrees to the horizontal but is preferably angled at 60 degrees.

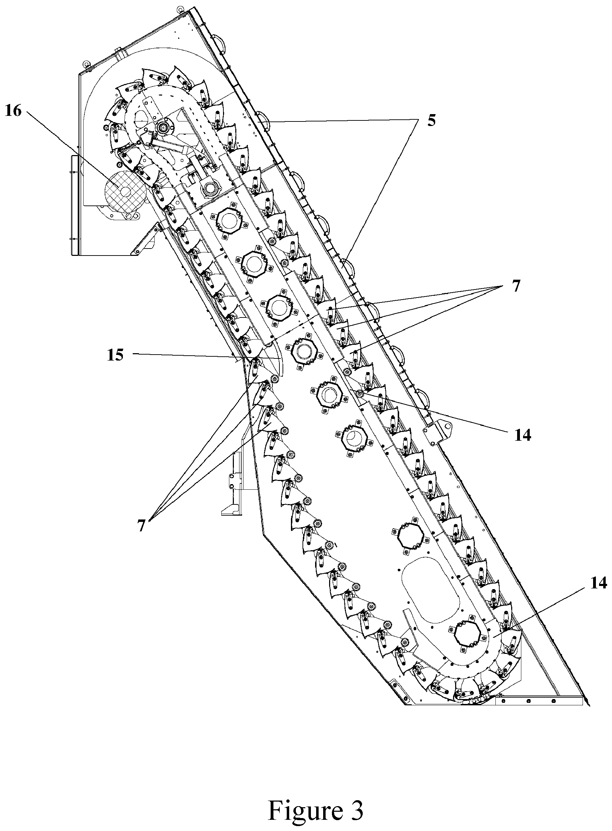

As shown in Figure 3, internally, the apparatus comprises a plurality of filter units 7 arranged around a loop. The loop is defined by a pair of chains.

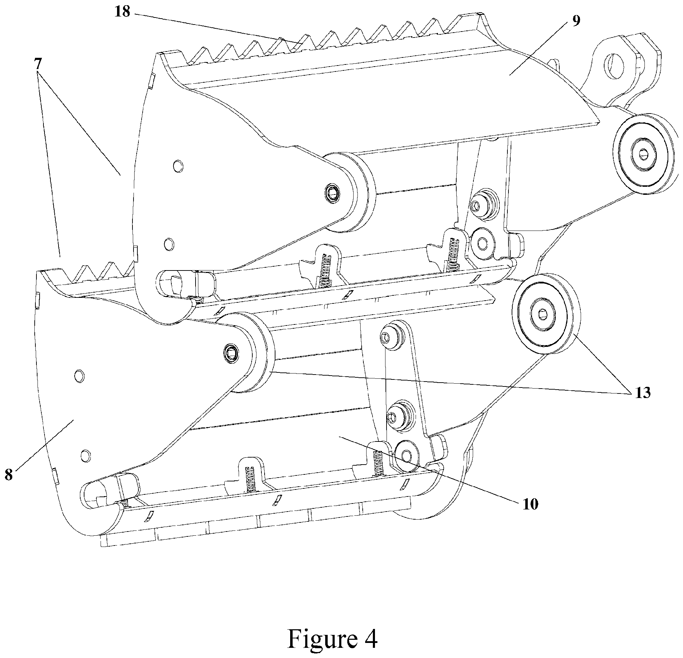

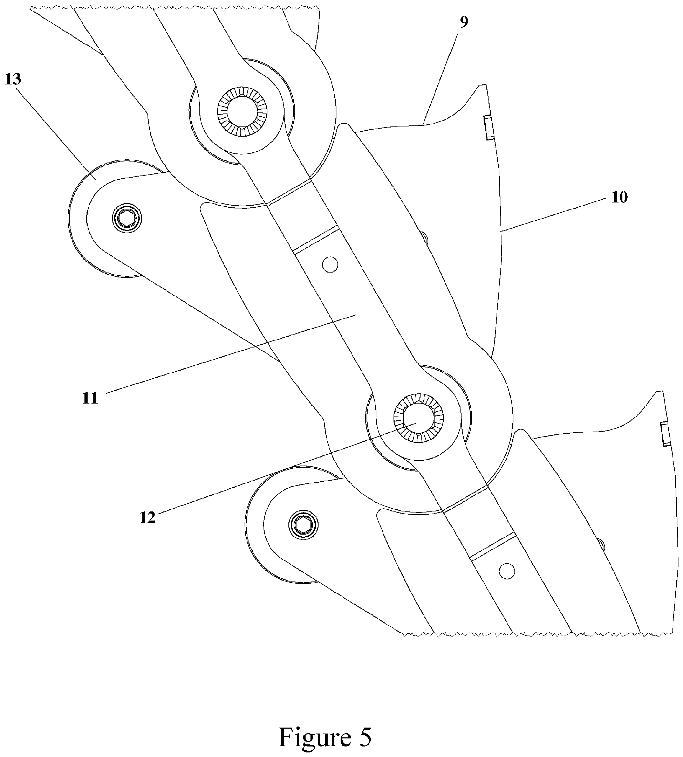

Figures 4 and 5 show exemplary embodiments of the filter units 7. Each filter unit 7 is step shaped and comprises a tread plate 9 and a riser plate 10 joined at approximately right angles along one edge. The two plates may be formed by folding a single sheet of metal but are preferably formed by joining two separate sheets. Approximately triangular sidewalls 8 at each end of each filter unit 7 robustly maintain its step shape.

Each side of the filter unit 7 is attached to a chain link 11 by a rotatable mount 12. The chain links 11 are joined to form two chain loops (i.e. one on each side of the filter units 7, like the strings of a staircase) extending from the top module 1 of the filter apparatus to the bottom module 3 and back. The chain loops are supported by head gears at the top module 1. The filter units 7 are thereby arranged in a continuous loop and, in use, move around the loop, in a fashion similar to a moving staircase.

The chain loops are formed independently of the filter units 7, as this is a more robust arrangement than apparatus where filter units are directly hinged together. It can also facilitate maintenance as the chain loop does not need to be broken when a filter unit 7 is removed for repair or replacement.

The rotatable mounts 12 are positioned on sidewalls 8 of the filter unit 7 near the bottom of the riser plate 10; that is near the trailing edge of the filter unit 7 as it moves around the apparatus (i.e. the edge of the riser plate 10 opposite the tread plate 9). This arrangement allows the tread plate 9 of each filter unit 7 to slide past the bottom edge of the riser plate 10 of the adjacent filter unit 7 in front of it in the loop. This relative movement has the effect of wiping the tread plate 9 and is useful for cleaning solid material off the tread. It is the opposite of a traditional moving staircase in which the riser of each step moves past the tread of the adjacent step behind, such that the riser is wiped. It has been found that an arrangement where each filter unit 7 is pivoted about its trailing edge and the rotation is guided by its leading edge provides the best wiping action across the following tread plate 9.

The riser plate 10 comprises a filter screen. In a preferred embodiment, the tread plate 9 is a continuous sheet because solid material extracted from the liquid flow would accumulate in any filter in the tread plate. However, in some embodiments the tread plate may include a filter screen, holes or some profiling to assist in draining material on the tread plate. Preferably the filter screens are quick release to assist with maintenance and replacement in the field. In one embodiment, the filter screens are located within riser plate 10 by complementary profiling of a frame of the filter unit 7 and maintained in position via spring loaded plates. In one embodiment, the spring loaded plates are attached to the filter unit sidewalls 8 and a hole in the riser plate 10 allows access to the spring loaded plate from outside the loop to release the filter screens when required. In one embodiment, a tool, such as a screwdriver, is inserted through the hole to move the plate against the bias of the spring and disengage the plate from the filter screen.

Each filter screen has a pattern of holes to allow fluid to pass through but to catch solid material. Preferably each filter screen has a plurality of holes each of 6mm or less in order to catch solid material larger than 6mm. Alternatively, the filter screens may comprise a framed wire mesh or a series of vertical bars.

The filter units 7 are driven around the loop by a drive mechanism 4, preferably in the top module 1 so that it is positioned away from the majority of the liquid being filtered. The drive mechanism comprises a motor, a gearing system and two head gears. The motor is preferably electric. The head gears engage with the two chain loops to drive the chains and convey the filter units 7 around the loop.

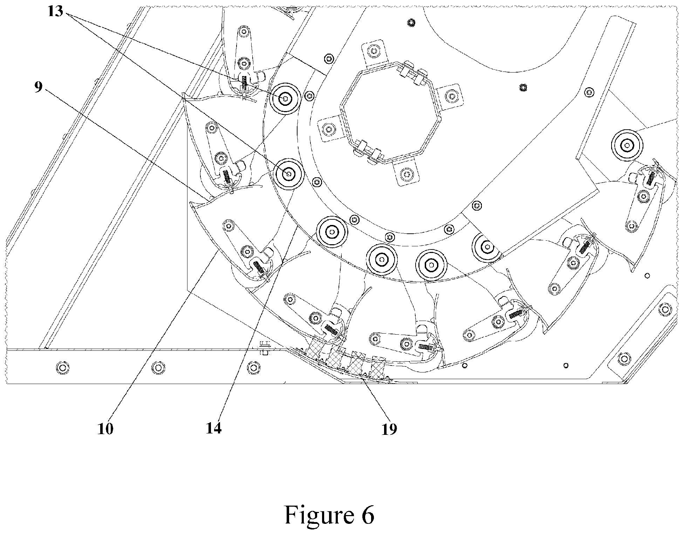

Each filter unit 7 also comprises two castor wheels 13, one positioned towards each side of the unit and at the front of each tread plate 9 (i.e. nearer to the edge of the tread plate 9 opposite to the riser plate 10 than to the rotatable mount). The castor wheels 13 may be mounted inside the sidewalls 8 of the filter unit 7 on an extension of the sidewall 8 positioned in front of the tread. The castor wheels 13 are adapted to engage with a guide track 14 attached to the apparatus frame. The position of the track is shown in Figure 3. In one embodiment, the bottom module does not include a gear to guide the chain but the filter units are guided around the bottom section of the apparatus by a guide track 14 on which the castors run, as shown in Figure 6.

The guide track 14 also guides the rotation of each filter unit 7 as it moves around the loop. As the trailing edge of the filter unit 7 is attached to the drive chain, as the guide track moves further from or nearer to the guide chain, the angle of each step filter unit 7 relative to the chain is adjusted. Each filter unit 7 is therefore rotated to a desired orientation as it progresses around the loop.

In particular, the guide track 14 pushes the castors 13 outwards as the filter unit 7 rises from the fluid channel, thereby pushing the tread plate to a horizontal orientation for lifting solid material. However, at the bottom of the apparatus, the riser plates 10 need to remain close to and substantially parallel with the bottom of the channel to prevent solid material bypassing the apparatus. As shown in Figure 6, the castors 13 are lifted by the guide track to present a smooth profile around the bottom of the loop, thereby keeping a substantially constant distance between the bottom of the apparatus and the filter units 7.

Each guide track 14 comprises two rails which are positioned substantially concentrically around the loop around which the filter units 7 travel. When the castors 13 run on the inner rails, the filter units 7 are pushed outwards against gravity to form steps. When the castors run on the outer rails, they are pulled inwards against gravity so the filter units 7 present a smooth profile outside the loop. The rails do not need to be continuous and, in a preferred embodiment, are present only where needed to provide a specific presentation of the filter units. The rails are not necessary in those sections of the loop where the profile of the steps is not important or the required profile is achieved by the action of gravity alone on the filter unit.

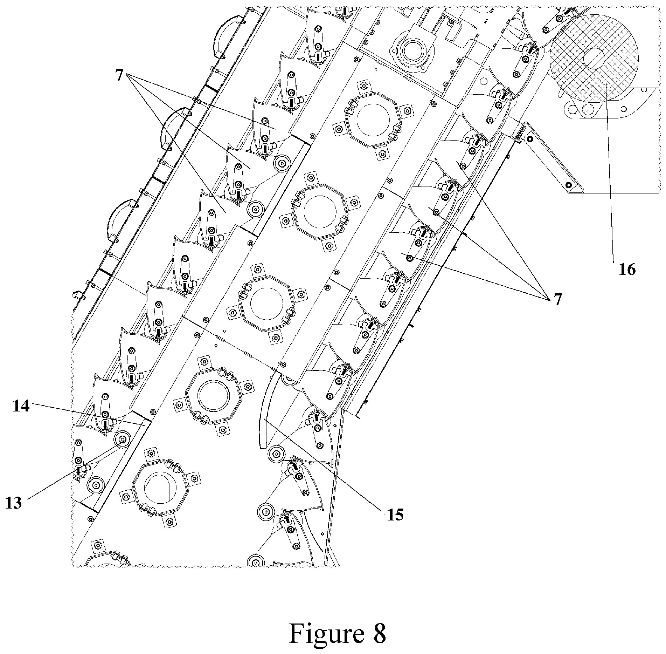

In one embodiment, the guide track 14 is not needed for the majority of the downward section of the loop. As shown in Figure 8, a profiled plate 15 at the end of the guide track 14 may be used to ensure the filter units 7 are in substantially the correct orientation prior to the castors 13 leaving the guide track 14. Although free to rotate, the filter units 7 tend to remain in substantially the same orientation until the castor 13 is again engaged with the guide track 14 towards the bottom of the apparatus. This reduces friction in the loop and wear on the castors. An orientation of the filter units 7, with riser plate 10 perpendicular to the water flow is least restrictive of water flow through the bottom of the apparatus and allows for the greatest possible flow rate through the apparatus. In one embodiment, the correct orientation is maintained by gravity as the filter units 7 move downwards in that part of the loop for which the liquid is required to flow backwards through the returning filter units 7.

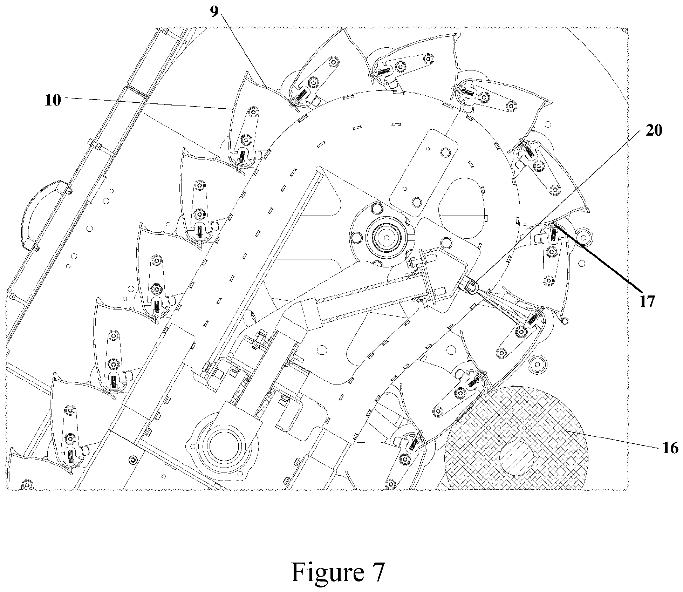

As shown in Figure 7, the external stepped presentation of the filter units 7 is maintained as they move over the head gear at the top of the apparatus. At this point, the castors 13 are pushed outwards by the inner rail. This ensures that the solid material is carried over the top of the apparatus. It is then allowed to fall by gravity into a discharge chute positioned below the top module of the apparatus (i.e. to the right in Figure 7, although not shown).

However, gravity alone is often not sufficient to remove all the solid material from the filter units 7 and a cleaning mechanism is required to remove the remaining solid material. The present invention exhibits a three stage cleaning process.

As the filter units 7 begin to move downwards, the castors 13 move from the inner rail to the outer rail by gravity and the filter units 7 are drawn in to present a smooth profile to a brush 16. As the external profile presented by the filter units 7 changes, the trailing edge of a leading unit pushes any remaining solid material off the tread plate 9 of a trailing unit, thereby wiping the tread plate 9 clean. This first stage of the cleaning process results from the relative movement of adjacent filter units 7 and is enabled by the filter units 7 being rotatable about a trailing edge.

In a second stage, liquid is sprayed through the filter screens in the opposite direction to the flow of the liquid being filtered in order to push the solids material off the filter screens and into the discharge chute. The liquid is preferably taken from the filtered liquid flow after it has passed through the apparatus and is sprayed onto the inside of the filter units 7 via a row of nozzles 20 positioned inside the loop behind the filter units 7.

In a third stage of the cleaning process, the brush 16 brushes any remaining solid material off the riser plate 10 of the trailing screen, thereby cleaning the filter screen. By this stage, the filter unit 7 is presenting a smooth profile so as not to wear or damage the brush 16.

The brush 16 may include bristles and/or wipers. The brush 16 is preferably a cylindrical brush and may rotate. In one embodiment, the brush is rotated by the same drive mechanism that drives the chains.

After the cleaning process, the cleaned filter units 7 continue around the loop to the bottom of the apparatus to collect more solid material.

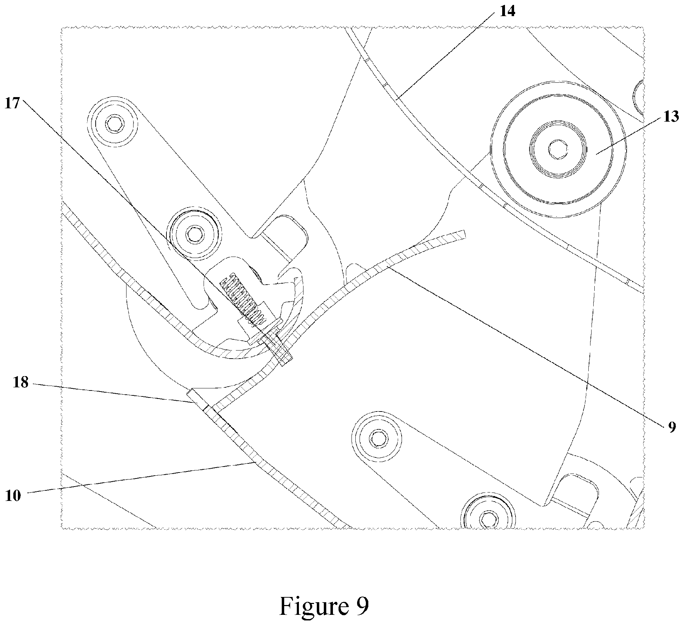

A seal between adjacent filter units 7 is shown in Figure 9. The gap between units must be sufficiently small to prevent solid material passing between them but sufficiently large that the filter units 7 do not jam. As the chain links wear, the gap tends to expand and a robust and adaptable seal is therefore required.

Each filter unit 7 may have a seal 17 mounted to its trailing edge to form a tight seal with the leading edge of the adjacent filter unit 7 in order to ensure that solid material does not pass between the units. The seal 17 is preferably spring loaded so that it will self-adjust over the life of the filter unit 7. The spring seal 17 also allows the seal to adjust to compensate for any wear in the chain links 11 or mountings of the filter units 7 which result in a larger gap between the units.

In one embodiment, a plurality of seals are fitted to a common bar and segmented with a gap of less than the hole size of the filter screens. Each seal is preferably in the form of an elongate wiper as shown, for example in Figure 4. The bar is positioned inside the filter unit 7 and the seal segments protrude through slots in a heel section formed at the trailing edge of the filter unit 7. The springs are preferably positioned behind every third seal segment.

To enhance the seal, the tread plate 9 of each filter unit 7 is contoured substantially as an arc of a circle centred on the filter unit mount, so as to provide a substantially constant gap as the tread plate 9 moves relative to the trailing edge of the adjacent filter unit in front. i.e. a cross section of the tread plate 9 of each filter unit 7 is in part shaped as an arc of a circle centred on the axis of the rotatable mount 12 of the filter unit 7. Further, the tread plate 9 may have a slightly raised profile towards the edge where it joins the riser plate 10. This contouring is preferably in the form of a gradual deviation from the arc which may form a smooth ridge, as shown in the Figures. This ensures that the seal is tight when the step-filter units 7 present a smooth profile outside the loop.

In one embodiment tines 18 may be placed along the edge of the tread plate 9 where it meets the riser plate 10 or to the edge of the riser plate 10 where it meets the tread plate 9 to assist the filter unit 7 in collecting large solids and further assist in preventing rag roll. The tines 18 are orientated to lay flat when the filter unit 7 is presenting a flat profile so that the tines do not damage brushes and seals, for example, preferably in the plane of the riser plate 10.

A further seal 19 at the bottom of the apparatus will prevent solid material passing between the bottom of the loop of filter units 7 and the base of the channel in which the liquid is flowing. As shown in Figures 6, the seal comprises an elongate brush fixed to the bottom of the apparatus. The bristles are preferably made of PBT (polybutylene terephthalate) and brush against the riser plates 10 which, as described earlier, present a smooth profile to the outside of the loop at this position. The apparatus may also include a fixed base screen which allows the liquid to flow beneath the apparatus. The base screen is preferably substantially horizontal and the flow of liquid over it can assist in drawing solid material downwards towards the tread plates 9 of the filter units 7.

The apparatus is designed to be robust in corrosive environments and is therefore preferably made of stainless steel.

It is to be understood that any feature described in relation to one embodiment may be used alone or in combination with other features described and may also be used in combination with one or more features of one or more other embodiments, so long as technically feasible. Furthermore, equivalents and modifications not described may also be employed without departing from the scope of the invention, which is defined by the following claims.

## Claims

1. Apparatus for removing solid material from liquid comprising:
a pair of chains, each forming a continuous loop;
a plurality of step-shaped filter units (7) each comprising a riser plate (10) and a tread plate (9), each filter unit (7) mounted between the chains, by rotatable mounts (12) allowing rotation about an axis along the edge of the riser plate (10) opposite to the tread plate (9) ;
a drive mechanism (4) to convey the filter units (7) around the loop;
a guide track (14) that engages with the filter units to guide the rotation of each filter unit (7), such that in use, each filter unit sequentially transitions between presenting a stepped profile and a smooth profile on the outside of the loop.

2. The apparatus of claim 1, wherein the guide track (14) comprises rails which engage with castors (13) mounted on each filter unit (7) nearer to the edge of the tread plate (9) opposite to the riser plate (10) than to the rotatable mount so that, in use, rotation of the filter unit (7) about the rotatable mount (12) at a trailing edge is controlled by the castors (13) at a leading edge.

3. The apparatus of any previous claim, wherein the stepped profile is presented on those parts of the loop where the filter unit (7) is rising, to support solid material on the step.

4. The apparatus of any previous claim, wherein the stepped profile is maintained over the top of the loop to allow solid material to fall from the inverted step into a discharge chute by gravity.

5. The apparatus of any previous claim further comprising a cleaning brush positioned to brush solid material off the units into a discharge chute wherein the filter units (7) present a smooth profile as they pass the cleaning brush.

6. The apparatus of claim 5, wherein the brush (16) is a rotatable cylindrical brush optionally incorporating wipers; and wherein, optionally, a motor that drives the drive mechanism (4) also drives the brush (7).

7. The apparatus of any previous claim, wherein a spring loaded seal (17) is mounted to along the edge of the riser plate (10) opposite to the tread plate (9) to form a tight seal with an adjacent filter unit (7).

8. The apparatus of any previous claim, wherein a cross section of the tread plate (9) of each filter unit (7) is in part shaped as an arc of a circle centred on the axis of the rotatable mount (12) of the filter unit (7).

9. The apparatus of any previous claim, wherein the edge of the tread plate (9) where it meets the riser plate (10) is profiled to incorporate a smooth ridge.

10. The apparatus of any previous claim, wherein each filter unit (7) include tines extending from the riser plate (10) along the edge that meets the tread plate (9).

11. The apparatus of any previous claim further comprising cleaning jets which spray liquid which has already been filtered by the apparatus though the filter units (7) in the opposite direction to the flow of the liquid being filtered to push the solid material off the units into the discharge chute.

12. The apparatus of any previous claim wherein the bottom of the loop is in a channel which carries the liquid and, optionally, includes a brush seal positioned between the bottom of the channel and the bottom of the loop of units to prevent solids passing under the units and wherein the filter units (7) present a smooth profile as they pass the brush seal.

13. The apparatus of any previous claim provided in modules comprising a top module (1), a bottom module (3) and one or more central modules (2) such that the loop may be any desired length.

14. The apparatus of any previous claim wherein the bottom section of the loop is in a channel which carries the liquid but may be pivoted about a point above a coping level of the channel to lift the apparatus out of the channel to facilitate maintenance or cleaning.

15. The apparatus of any previous claim wherein each filter units (7) further comprises a removable filter screen retained by a spring loaded plate.

## Patentansprüche

1. Einrichtung zum Entfernen von Festmaterial aus Flüssigkeit, umfassend:
ein Paar Ketten, die jede eine fortlaufende Schleife ausbilden;
eine Vielzahl von stufenförmigen Filtereinheiten (7), jede umfassend eine Steigplatte (10) und eine Trittplatte (9), wobei jede Filtereinheit (7) durch drehbare Halterungen (12) zwischen den Ketten montiert ist, die eine Drehung um eine Achse entlang der Kante der Steigplatte (10) gegenüber der Trittplatte (9) ermöglichen;
einen Antriebsmechanismus (4) zum Befördern der Filtereinheiten (7) um die Schleife;
eine Führungsbahn (14), die die Filtereinheiten in Eingriff nimmt, um die Drehung jeder Filtereinheit (7) derart zu führen, dass in Verwendung jede Filtereinheit nacheinander zwischen einem Präsentieren eines Stufenprofils und eines glatten Profils auf der Außenseite der Schleife wechselt.

2. Einrichtung nach Anspruch 1, wobei die Führungsbahn (14) Schienen umfasst, die Lenkrollen (13) in Eingriff nehmen, die auf jeder Filtereinheit (7) näher an der Kante der Trittplatte (9) gegenüber der Steigplatte (10) als an der drehbaren Halterung montiert sind, sodass, in Verwendung, die Drehung der Filtereinheit (7) um die drehbare Halterung (12) an einer Hinterkante durch die Lenkrollen (13) an einer Vorderkante gesteuert wird.

3. Einrichtung nach einem der vorhergehenden Ansprüche, wobei das Stufenprofil an den Teilen der Schleife präsentiert wird, wo die Filtereinheit (7) ansteigt, um Festmaterial auf der Stufe zu stützen.

4. Einrichtung nach einem der vorhergehenden Ansprüche, wobei das Stufenprofil über der Spitze der Schleife beibehalten wird, um zu ermöglichen, dass Festmaterial durch Schwerkraft von der umgekehrten Stufe in eine Abwurfschurre fällt.

5. Einrichtung nach einem der vorhergehenden Ansprüche, ferner umfassend eine Reinigungsbürste, die positioniert ist, um Festmaterial von den Einheiten in eine Abwurfschurre zu bürsten, wobei die Filtereinheiten (7) ein glattes Profil präsentieren, während sie die Reinigungsbürste passieren.

6. Einrichtung nach Anspruch 5, wobei die Bürste (16) eine drehbare zylindrische Bürste ist, die optional Wischer enthält; und wobei, optional, ein Motor, der den Antriebsmechanismus (4) antreibt, ebenso die Bürste (7) antreibt.

7. Einrichtung nach einem der vorhergehenden Ansprüche, wobei eine federbelastete Dichtung (17) entlang der Kante der Steigplatte (10) gegenüber der Trittplatte (9) montiert ist, um eine dichte Dichtung mit einer angrenzenden Filtereinheit (7) auszubilden.

8. Einrichtung nach einem der vorhergehenden Ansprüche, wobei ein Querschnitt der Trittplatte (9) jeder Filtereinheit (7) teilweise als ein Bogen eines Kreises geformt ist, der auf der Achse der drehbaren Halterung (12) der Filtereinheit (7) zentriert ist.

9. Einrichtung nach einem der vorstehenden Ansprüche, wobei die Kante der Trittplatte (9), wo sie auf die Steigplatte (10) trifft, profiliert ist, um einen glatten First zu enthalten.

10. Einrichtung nach einem der vorhergehenden Ansprüche, wobei jede Filtereinheit (7) Zinken umfasst, die sich von der Steigplatte (10) entlang der Kante erstrecken, die auf die Trittplatte (9) trifft.

11. Einrichtung nach einem der vorhergehenden Ansprüche, ferner umfassend Reinigungsdüsen, die Flüssigkeit, die bereits durch die Einrichtung gefiltert wurde, durch die Filtereinheiten (7) in der entgegengesetzten Richtung zu dem Fluss der Flüssigkeit sprühen, die gefiltert wird, um das Festmaterial von den Einheiten in die Abwurfschurre zu drücken.

12. Einrichtung nach einem der vorstehenden Ansprüche, wobei der Boden der Schleife in einem Kanal ist, der die Flüssigkeit trägt, und optional, eine Bürstendichtung einschließt, die zwischen dem Boden des Kanals und dem Boden der Schleife von Einheiten positioniert ist, um zu verhindern, dass Festkörper unter den Einheiten passieren, und wobei die Filtereinheiten (7) ein glattes Profil präsentieren, während sie die Bürstendichtung passieren.

13. Einrichtung nach einem der vorhergehenden Ansprüche, die in Modulen bereitgestellt ist, umfassend ein oberes Modul (1), ein unteres Modul (3) und ein oder mehrere zentrale Module (2), derart, dass die Schleife eine beliebige gewünschte Länge haben kann.

14. Einrichtung nach einem der vorhergehenden Ansprüche, wobei der untere Bereich der Schleife in einem Kanal ist, der die Flüssigkeit trägt, wobei er jedoch um einen Punkt über einem Abdeckniveau des Kanals geschwenkt werden kann, um die Einrichtung aus dem Kanal zu heben, um Wartung oder Reinigung zu erlauben.

15. Einrichtung nach einem der vorhergehenden Ansprüche, wobei jede Filtereinheit (7) ferner ein entfernbares Filtersieb umfasst, das durch eine federbelastete Platte gehalten wird.

## Revendications

1. Appareil permettant d'éliminer les matières solides d'un liquide comprenant :
une paire de chaînes, formant chacune une boucle continue ;
une pluralité d'unités de filtration en forme de gradins (7) comprenant chacune une plaque de colonne montante (10) et une plaque de roulement (9), chaque unité de filtration (7) étant montée entre les chaînes, par des supports rotatifs (12) permettant la rotation autour d'un axe le long du bord de la plaque de colonne montante (10) opposé à la plaque de roulement (9) ;
un mécanisme d'entraînement (4) pour transporter les unités de filtration (7) autour de la boucle ;
un chemin de guidage (14) qui entre en prise avec les unités de filtration pour guider la rotation de chaque unité de filtration (7), de telle sorte que lors de l'utilisation, chaque unité de filtration passe de manière séquentielle de la présentation d'un profil en gradins à la présentation d'un profil lisse à l'extérieur de la boucle.

2. Appareil selon la revendication 1, dans lequel le chemin de guidage (14) comprend des rails qui entrent en prise avec des roulettes (13) montées sur chaque unité de filtration (7) plus près du bord de la plaque de roulement (9) opposée à la plaque de colonne montante (10) que du support rotatif de sorte que, lors de,l'utilisation, la rotation de l'unité de filtration (7) autour du support rotatif (12) au niveau d'un bord arrière est commandée par les roulettes (13) au niveau d'un bord avant.

3. Appareil selon l'une quelconque revendication précédente, dans lequel le profil en gradins est présenté sur ces parties de la boucle où l'unité de filtration (7) s'élève, pour soutenir les matériaux solides sur le gradin.

4. Appareil selon l'une quelconque revendication précédente, dans lequel le profil en gradins est maintenu sur le dessus de la boucle pour permettre aux matières solides de tomber par gravité à partir du gradin inversé dans une goulotte d'évacuation.

5. Appareil selon l'une quelconque revendication précédente comprenant en outre une brosse de nettoyage positionnée pour nettoyer les matières solides des unités dans une goulotte d'évacuation dans laquelle les unités de filtration (7) présentent un profil lisse lorsqu'elles passent devant la brosse de nettoyage.

6. Appareil selon la revendication 5, dans lequel la brosse (16) est une brosse cylindrique rotative incorporant éventuellement des racleurs ; et dans lequel, éventuellement, un moteur qui entraîne le mécanisme d'entraînement (4) entraîne également la brosse (7).

7. Appareil selon l'une quelconque revendication précédente, dans lequel un joint à ressort (17) est monté le long du bord de la plaque montante (10) opposé à la plaque de roulement (9) pour former un joint étanche avec une unité de filtration adjacente (7).

8. Appareil selon l'une quelconque revendication précédente, dans lequel une section transversale de la plaque de roulement (9) de chaque unité de filtration (7) a en partie la forme d'un arc d'un cercle centré sur l'axe du support rotatif (12) de l'unité de filtration (7).

9. Appareil selon l'une quelconque revendication précédente, dans lequel le bord de la plaque de roulement (9), là où elle rencontre la plaque de colonne montante (10), est profilé pour incorporer une crête lisse.

10. Appareil selon l'une quelconque revendication précédente, dans lequel chaque unité de filtration (7) comporte des dents s'étendant à partir de la plaque de colonne montante (10) le long du bord qui rencontre la plaque de roulement (9).

11. Appareil selon l'une quelconque revendication précédente comprenant en outre des jets de nettoyage qui pulvérisent du liquide qui a déjà été filtré par l'appareil à travers les unités de filtrage (7) dans la direction opposée à l'écoulement du liquide à filtrer pour pousser la matière solide des unités dans la goulotte d'évacuation.

12. Appareil selon l'une quelconque revendication précédente dans lequel le fond de la boucle se trouve dans un canal qui transporte le liquide et, éventuellement, comporte un joint à brosse positionné entre le fond du canal et le fond de la boucle d'unités pour empêcher les solides de passer sous les unités et dans lequel les unités de filtration (7) présentent un profil lisse lorsqu'elles passent le joint à brosse.

13. Appareil selon l'une quelconque revendication précédente fourni en modules comprenant un module supérieur (1), un module inférieur (3) et un ou plusieurs modules centraux (2), de telle sorte que la boucle peut être de n'importe quelle longueur souhaitée.

14. Appareil selon l'une quelconque revendication précédente dans lequel la section inférieure de la boucle se trouve dans un canal qui transporte le liquide, mais peut être pivotée autour d'un point situé au-dessus du niveau de couronnement du canal pour soulever l'appareil hors du canal afin d'en faciliter l'entretien ou le nettoyage.

15. Appareil selon l'une quelconque revendication précédente dans lequel chaque unité de filtration (7) comprend en outre une crépine amovible retenue par une plaque à ressort.
